# EUROPÄISCHE PATENTSCHRIFT

(11) **EP 1 613 492 B1**
(45) Veröffentlichungstag und Bekanntmachung des Hinweises auf die Patenterteilung: **02.06.2010**
(21) Anmeldenummer: 04722247.6
(22) Anmeldetag: 22.03.2004
(51) Int. Cl.: B60H 1/00, F28D 1/04

(54) **VORRICHTUNG ZUM AUSTAUSCH VON WÄRME**
DEVICE FOR EXCHANGING HEAT
DISPOSITIF D'ECHANGE DE CHALEUR

(30) Priorität: 04.04.2003 DE 10315733
(43) Veröffentlichungstag der Anmeldung: 11.01.2006
(73) Patentinhaber: Behr GmbH & Co. KG, 70469 Stuttgart (DE)
(72) Erfinder: HALDER, Prasanta, 71254 Ditzingen-Heimerdingen (DE); KOUKOURAVAS, Evripidis, 72654 Neckartenzlingen (DE)
(74) Vertreter: Grauel, Andreas
(86) Internationale Anmeldenummer: PCT/EP2004/002969
(87) Internationale Veröffentlichungsnummer: WO 2004/087448

(56) Entgegenhaltungen:
- EP-A- 0 841 201
- EP-A- 0 893 292
- DE-A- 19 818 004
- DE-C- 10 225 469
- JP-A- 10 119 545
- JP-A- 55 051 615

## Beschreibung

Die Erfindung betrifft eine Vorrichtung zum Austausch von Wärme, insbesondere für Kraftfahrzeuge gemäß dem Oberbegriff von Anspruch 1.

Vorrichtungen zum Austausch von Wärme, wie beispielsweise Klimaanlagen für Kraftfahrzeuge, sind aus dem Stand der Technik seit langem bekannt. Bei diesen Anlagen besteht ein Bedürfnis, einzelne Teilbereiche des Fahrzeuginnenraums, beispielsweise den Frontbereich und den Fondbereich, getrennt zu klimatisieren. Zu diesem Zweck weisen im Stand der Technik die Vorrichtungen zum Austausch von Wärme mehrere separate Heizkörper zum Beispiel für den Front- und den Fondbereich eines Kraftfahrzeuges auf. Dies führt jedoch zu einem größeren benötigten Bauraum.

Die EP 0841 201 A2 offenbart einen Wärmetauscher, der verschiedene Segmente aufweist.

Der Erfindung liegt daher die Aufgabe zugrunde, eine Vorrichtung zum Austausch und zur Übertragung von Wärme zur Verfügung zu stellen, welche einerseits die getrennte Klimatisierung verschiedener Bereiche eines Fahrzeuginnenraums erlaubt, andererseits gegenüber herkömmlichen Vorrichtungen zum Austausch von Wärme mit einem nicht oder nicht wesentlich vergrößerten Bauraum auskommt.

Dies wird erfindungsgemäß durch eine Vorrichtung zum Austauschen und Zuführen von Wärme, insbesondere für ein Kraftfahrzeug, erreicht, gemäß dem Kennzeichen von Anspruch 1.

Diese Vorrichtung weist eine Zuführungseinrichtung zum Zuführen eines insbesondere gasförmigen Mediums auf, eine Heizeinrichtung zum Erwärmen wenigstens eines Teils des gasförmigen Medium, wenigstens einen in Strömungsrichtung des gasförmigen Mediums nach der Einrichtung zum Erwärmen angeordneten

Raum sowie wenigstens zwei von dem Raum ausgehenden Kanälen für das gasförmige Medium, welche in wenigstens zwei Klimatisierungszonen des Innenraums des Kraftfahrzeugs führen. Dabei ist in wenigstens einem der Kanäle eine Regeleinrichtung vorgesehen, welche die Menge des durch den Kanal strömenden Mediums regelt. Die Einrichtung zum Erwärmen weist wenigstens zwei, bevorzugt eine Vielzahl von Durchflusseinrichtungen für ein zweites Medium auf, wobei wenigstens zwei dieser Durchflusseinrichtungen unterschiedlich gestaltet sind.

Unter einer Zuführeinrichtung wird dabei eine Einrichtung verstanden, welche geeignet ist, ein insbesondere gasförmiges Medium in eine vorgegebene Richtung zu leiten, wie beispielsweise ein Strömungskanal oder dergleichen. Unter dem gasförmigen Medium wird insbesondere Luft, aber auch andere Gase verstanden. Im weiteren wird jedoch nur noch von Luft gesprochen.

Ein Raum zeichnet sich im Rahmen der vorliegenden Erfindung dadurch aus, dass er von Wänden oder sonstigen in wesentlichen gasundurchlässigen Begrenzungen umgeben ist, jedoch in einzelnen Vorzugsrichtungen Öffnungen aufweisen kann.

Unter einem Kanal wird eine Zwangsführung für die Luft verstanden, welche die Luft an einen vorbestimmten Ort, beispielsweise den Frontbereich eines Kraftfahrzeuges, leitet.

Bei dem zweiten Medium handelt es sich im Rahmen der vorliegenden Erfindung um ein insbesondere flüssiges Medium, welches im Falle eines Wärmeaustauschers Wärme an die Luft abgeben kann. In einer bevorzugten Ausführungsform ist die Zuführungseinrichtung für die Luft ein in Strömungsrichtung der Luft vor der Heizeinrichtung angeordneter Raum. Bevorzugt ist in der Zuführungseinrichtung eine weitere Vorrichtung zum Austausch von Wärme, wie insbesondere ein Verdampfer, angeordnet. Bevorzugt ist auch ein Lüfter, Ventilator oder dergleichen vorgesehen, welcher die Bewegung der Luft in Strömungsrichtung wenigstens teilweise beschleunigt. Ferner können sowohl in Strömungsrichtung vor oder nach der Heizeinrichtung zusätzliche Heizelemente, wie insbesondere - aber nicht ausschließlich - PTC-(Positive Temperature Coefficient) Heizelemente vorgesehen sein.

Bevorzugt wird, wie dargestellt, die Heizeinrichtung von wenigstens einem zweiten, insbesondere flüssigen, Medium durchströmt und weist mehrere Zuleitungen und/oder Ableitungen für das zweite Medium auf. Bei dem zweiten Medium handelt es sich vorzugsweise um Wasser aus dem Kühlkreislauf des Verbrennungsmotors des Kraftfahrzeuges, es sind jedoch auch andere Medien denkbar. Bevorzugt weist dabei die Heizeinrichtung drei Zuführungen und zwei Ableitungen für das zweite Medium auf. Bevorzugt weist diese wenigstens eine Zuführung und/oder Ableitung der Heizeinrichtung eine Regel- bzw. Steuereinrichtung auf, um die Menge des durch die Zuführung fließenden und damit in den entsprechenden Kreislauf der Heizeinrichtung gelangenden flüssigen Mediums zu regeln und/oder zu steuern. Als Regeleinrichtungen kommen beispielsweise Regelventile in Betracht.

In einer weiteren Ausführungsform ist die Heizeinrichtung in mehrere Bereiche unterteilt, wobei der Wärmeaustausch mit der Luft in wenigstens einem dieser Bereiche wasserseitig und in wenigstens einem dieser Bereiche luftseitig geregelt ist.

Unter einer wasserseitigen Regelung wird verstanden, dass die Temperatur der durch die Heizeinrichtung dringenden Luft im wesentlichen durch eine Veränderung der Parameter des durch die Heizeinrichtung fließenden Wassers geregelt wird, das heißt insbesondere durch die Temperatur und die Menge des Wassers. Zu diesem Zweck kann beispielsweise am Zulauf ein Regelventil angebracht sein, welches die Menge des durch die Heizeinrichtung fließenden Wassers regelt bzw. steuert.

Unter einer luftseitigen Regelung wird verstanden, dass die Menge und/oder Temperatur des durch die Heizeinrichtung fließenden flüssigen Mediums, das heißt des Wassers, im wesentlichen konstant gehalten werden und mittels zusätzlichen Regeleinrichtungen gesteuert bzw. geregelt wird, welche Menge an Luft durch die Heizeinrichtung gelangt und welche Menge an Luft an ihr vorbei, um auf diese Weise in Strömungsrichtung nach der Heizeinrichtung ein variables Mischungsverhältnis einzustellen und so die gewünschte Mischtemperatur der Luft zu regeln bzw. zu steuern.

In einer weiteren bevorzugten Ausführungsform weisen die Durchflusseinrichtungen einen flachrohrartigen Querschnitt auf.

Unter flachrohrartig wird dabei verstanden, dass die Durchflusseinrichtungen einen Querschnitt aufweisen, welcher wenigstens eine längere und eine kürzere Seite aufweist, wobei die längere Seite gegenüber der kürzeren Seite wesentlich länger ist. Möglich wäre also beispielsweise ein rechteckiger Querschnitt, wobei die längere Seite wesentlich länger ist als die kürzere oder ein ellipsenförmiger Querschnitt, wobei der längere Durchmesser den kürzeren Durchmesser bei weitem übersteigt. Die flachrohrartigen Durchflusseinrichtungen können im Inneren einen oder mehrere Strömungskanäle aufweisen.

In einer weiteren bevorzugten Ausführungsform weist wenigstens eine der Durchflusseinrichtungen wenigstens einen gekrümmten Abschnitt auf. Unter einem gekrümmten Abschnitt wird dabei verstanden, dass die Strömung eines Mediums in einer insbesondere flachrohrartigen Durchflusseinrichtung ihre Richtung um einen vorgegebenen Winkel ändert und diese Änderung durch eine Zwangsführung seitens der Durchflusseinrichtung bewirkt wird, wobei die Durchflusseinrichtung selbst nicht gekrümmt zu sein braucht.

Bevorzugt weist auch wenigstens eine der Durchflusseinrichtungen im wesentlichen keinen in Längsrichtung gekrümmten Abschnitt auf, erstreckt sich also von einem Endabschnitt der Durchflusseinrichtung geradlinig zu einem zweiten Endabschnitt der Durchflusseinrichtung. Bevorzugt weist die Vorrichtung zum Austausch von Wärme eine Vielzahl von Durchflusseinrichtungen mit wenigstens einem gekrümmten Abschnitt und eine Vielzahl von Durchflusseinrichtungen ohne gekrümmten Abschnitt auf.

In einer weiteren bevorzugten Ausführungsform ist eine Heizeinrichtung mit wenigstens einer Sammel- und/oder Verteilungseinrichtung vorgesehen, an welcher wenigstens eine Zuleitung oder wenigstens eine Ableitung vorgesehen ist. Bevorzugt weisen die Vorrichtungen zwei Sammel- und/oder Verteilungseinrichtungen auf, an welchen sämtliche Zu- und Ableitungen vorgesehen sind. Es ist jedoch auch möglich, mehrere Sammel- und/oder Verteilungseinrichtungen vorzusehen.

In einer weiteren bevorzugten Ausführungsform sind in wenigstens einer der Sammel- und/oder Verteilungseinrichtungen erste Trenneinrichtungen vorgesehen, welche die Sammel- und/oder Verteilungseinrichtung in wenigstens zwei Teilräume flüssigkeitsdicht unterteilen. Die Trenneinrichtungen können beispielsweise Trennwände sein, welche von außen in die Sammel-und/oder Verteilungseinrichtung eingeschoben und anschließend mit dieser verschweißt, verklebt oder auf ähnliche Weise mit dieser fixiert werden.

Bevorzugt weisen dabei beide Verteilungs- und/oder Sammelräume derartige Trenneinrichtungen auf.

In einer weiteren bevorzugten Ausführungsform weist dabei wenigstens eine Sammel- und/oder Verteilungseinrichtung bevorzugt beide Sammel-und/oder Verteilungseinrichtungen eine zweite Trenneinrichtung auf, wobei die Flächennormale dieser zweiten Trenneinrichtung im wesentlichen senkrecht zu den Flächennormalen der ersten Trenneinrichtungen steht. Anstelle der zweiten Trenneinrichtung können jedoch auch zwei getrennte Sammel-und/oder Verteilungsräume, welche einander gegenüber parallel an wenigstens einem Ende der Durchflusseinrichtungen angeordnet sind, vorgesehen sein.

In einer weiteren bevorzugten Ausführungsform laufen innerhalb der Heizeinrichtung drei Flüssigkeitsströme wenigstens teilweise getrennt voneinander. Bevorzugt kann jedoch auch eine gemeinsame Ableitung und/oder Zuführung für zwei oder mehrere Flüssigkeitsströme vorgesehen sein. Zu diesem Zweck sind an der Heizeinrichtung drei Zuführungen und zwei Ableitungen für das flüssige Medium vorgesehen.

In einer weiteren Ausführungsform ist wenigstens eine der Durchflusseinrichtungen um einen Winkel von im wesentlichen 180° gebogen bzw. gekrümmt. Unter einer Krümmung der Durchflusseinrichtung um 180° wird dabei verstanden, dass die Strömungseinrichtung des flüssigen Mediums innerhalb der Durchflusseinrichtung im wesentlichen umgekehrt wird. Dabei ist bevorzugt die Durchflusseinrichtung im wesentlichen im Bereich der geometrischen Mitte gekrümmt, das heißt, die Strömungsrichtung wird etwa im Bereich der Mitte der Durchflusseinrichtung umgekehrt, so dass ein Anfangs-und ein Endabschnitt der Durchflusseinrichtung auf im wesentlichen der gleichen Höhe liegen. Die Durchflusseinrichtungen ragen bevorzugt in die Verteilungs- und/oder Sammeleinrichtungen derart hinein, dass zwischen den Durchflusseinrichtungen und den Sammel- und/oder Verteilungseinrichtungen eine Fluidverbindung besteht. In einer weiteren bevorzugten Ausführungsform sind wenigstens zwei der gekrümmten Durchflusseinrichtungen einteilig miteinander verbunden. In diesem Fall weisen dann die jeweiligen Endabschnitte der einen Durchflusseinrichtung in die entgegengesetzte Richtung wie die Endabschnitte der anderen Durchflusseinrichtung.

In einer weiteren bevorzugten Ausführungsform sind nach der Heizeinrichtung zwei oder mehrere voneinander getrennte Räume vorgesehen. Dabei gehen von den mehreren Räumen mehrere Kanäle für die Luft aus, welche in mehrere Klimatisierungszonen des Innenraums des Kraftfahrzeuges führen. Dabei kann es sich beispielsweise um Kanäle für den linken, das heißt fahrerseitigen, Frontbereich des Fahrzeuges, den rechten, das heißt beifahrerseitigen, Frontbereich des Fahrzeugs, einen hinteren Bereich sowie einen Fußbereich vorne und/oder hinten sowie weitere Bereiche, wie Frontscheibe, Heckscheibe etc. handeln. In einer weiteren Ausführungsform ist in einem, bevorzugt in mehreren, und besonders bevorzugt in jedem der Kanäle eine Regeleinrichtung vorgesehen, welche die Menge des durch den Kanal strömenden Mediums regelt. Bei dieser Regeleinrichtung kann es sich beispielsweise um eine Lüftungsklappe handeln, welche variabel eingestellt werden kann, damit die Menge des durch den Kanal bzw. durch einen Endabschnitt des Kanals strömenden Mediums, das heißt der Luft, gesteuert und/oder geregelt wird. Diese Regeleinrichtung kann beispielsweise manuell einstellbar sein; denkbar wäre jedoch auch eine Motorsteuerung.

In einer weiteren bevorzugten Ausführungsform ist wenigstens eine Regeleinrichtung vorgesehen, welche nicht in einem der Kanäle für das gasförmige Medium angeordnet ist. Bevorzugt kann diese wenigstens eine Regeleinrichtung in Strömungsrichtung der Luft vor der Heizeinrichtung, unmittelbar nach der Heizeinrichtung oder neben der Heizeinrichtung angeordnet sein.

In einer weiteren bevorzugten Ausführungsform ist wenigstens eine Regeleinrichtung in Strömungsrichtung der Luft vor einem vorbestimmten Bereich der Heizeinrichtung angeordnet.

Weitere Vorteile und Ausführungsformen ergeben sich aus den beigefügten Zeichnungen. Darin zeigen:
- Fig. 1: eine schematische Darstellung einer erfindungsgemäßen Vorrichtung zum Austauschen und Zuführen von Wärme;
- Fig. 2: eine Darstellung einer Heizeinrichtung für eine erfindungsgemäße Vorrichtung zum Austauschen von Wärme;
- Fig. 3: eine Darstellung der Durchflusseinrichtungen für die Heizeinrichtung aus Fig. 2;
- Fig. 4: eine weitere Darstellung der Durchflusseinrichtungen für die Heizeinrichtung aus Fig. 2; und
- Fig. 5: eine Draufsicht auf die Durchflusseinrichtung entlang der Linie AA in Fig. 4.

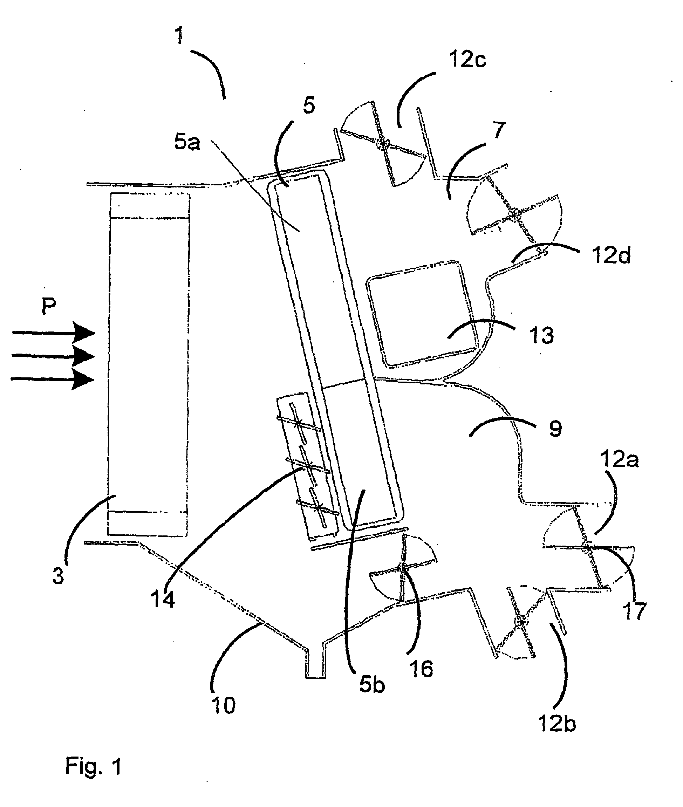

In Fig. 1 ist eine erfindungsgemäße Vorrichtung zum Austauschen von Wärme, insbesondere für ein Kraftfahrzeug, dargestellt, mit einer Zuführungseinrichtung, das heißt in diesem Falle einen Zuführungskanal für die Luft. Die Strömungsrichtung der Luft ist durch die drei Pfeile P angedeutet. Vor dem Kanal kann ein (nicht gezeigter) Lüfter oder dergleichen angeordnet sein. Das Bezugszeichen 3 kennzeichnet eine Einrichtung zum Austauschen von Wärme, wie beispielsweise einen Verdampfer. Das Bezugszeichen 5 innerhalb des Vorrichtungsgehäuses 10 bezieht sich auf eine Heizeinrichtung, welche in zwei Bereiche 5a und 5b unterteilt ist.

Vor dem Bereich 5b der Heizeinrichtung 5 sind drei Regeleinrichtungen 14 angeordnet, welche die Menge des durch den Bereich 5b der Heizeinrichtung 5 fließenden Luftstromes regulieren bzw. ändern oder steuern können. Es können jedoch auch mehr oder weniger derartiger Regeleinrichtungen 14 an dieser Stelle vorgesehen sein.

In der Zeichnung unterhalb der Heizeinrichtung 5 ist eine weitere Regeleinrichtung 16 vorgesehen. Mittels dieser Regeleinrichtung kann die Menge an Luft reguliert werden, die an der Heizeinrichtung vorbeiströmt. Insbesondere kann mittels dieser Regeleinrichtung im Zusammenspiel mit den Regeleinrichtungen 14 auch das Mischungsverhältnis der in den Raum 9 gelangenden Luft reguliert werden. Aus diesem Grunde findet hier definitionsgemäß eine luftseitige Regelung statt. Die Parameter des durch den Bereich 5b der Heizeinrichtung fließenden Mediums, wie Druck und Temperatur, werden im wesentlichen konstant gehalten und die Temperatur der in den Raum 9 gelangenden Luft wird im wesentlichen über die Anteile der Luft geregelt, welche durch den Bereich 5b der Heizeinrichtung hindurch und die Anteile, die unterhalb des Bereichs 5b vorbeigeleitet werden.

Von dem in Strömungsrichtung hinter der Heizeinrichtung liegenden Raum 9 erstrecken sich zwei Kanäle 12a und 12b. In diesen Kanälen 12a und 12b sind zwei weitere Regeleinrichtungen 17 zur Regulierung bzw. Steuerung der durch diese Kanäle tretenden Luft vorgesehen. Bei diesen Regeleinrichtungen 17 kann es sich beispielsweise um Luftklappen handeln. Die beiden Kanäle 12a und 12b können beispielsweise zu einem hinteren Bereich des Fahrzeuginneren führen.

Das Bezugszeichen 7 kennzeichnet einen weiteren Raum, der in Strömungsrichtung hinter dem Bereich 5a der Heizeinrichtung 5 angeordnet ist. Auch dieser Raum 7 weist zwei Kanäle 12c und 12d auf, welche beispielsweise in einen vorderen Bereich eines Kraftfahrzeuginneren führen können. Daneben kann auch ein Kanal 13 vorgesehen sein, der zum Beispiel in den Fußraum des Fahrers und/oder Beifahrers führen kann. In Strömungsrichtung von dem Bereich 5a der Heizeinrichtung sind keine zusätzlichen Regeleinrichtungen vorgesehen. Die Erwärmung der Luft beim Durchgang durch den Bereich 5a der Heizeinrichtung 5 wird im wesentlichen durch die Menge und/oder die Temperatur des durch diesen Bereich fließenden Mediums geregelt, so dass hier von einer wasserseitigen Regelung gesprochen werden kann.

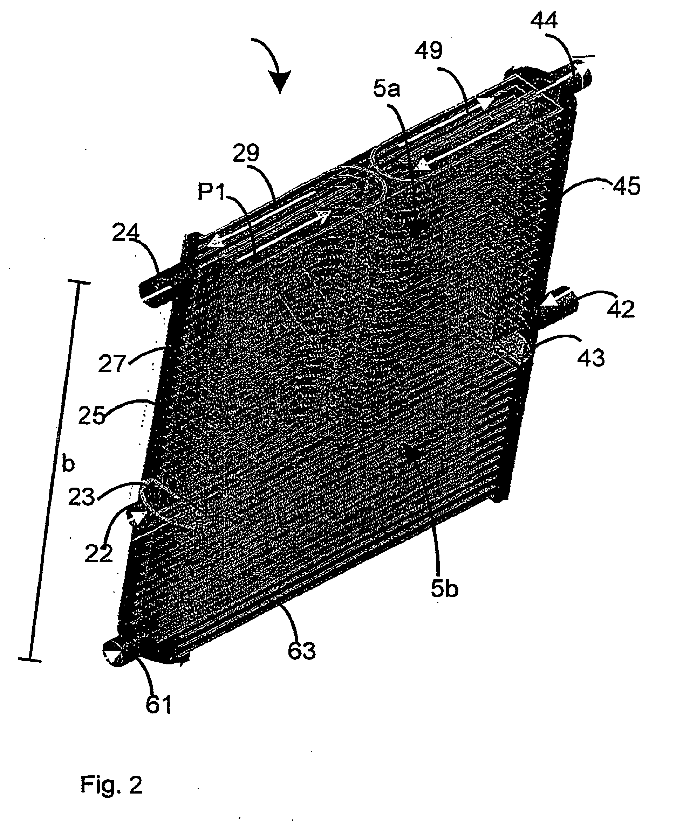

Fig. 2 zeigt eine Heizeinrichtung 5 für die erfindungsgemäße Vorrichtung zum Austauschen von Wärme. Die Bezugszeichen 5a und 5b zeigen die Bereiche der Heizeinrichtung 5.

Die Bezugszeichen 22 und 42 beziehen sich auf Zuführungen für eine Flüssigkeit in die Heizeinrichtung. Bei dieser Flüssigkeit handelt es sich bevorzugt um Wasser aus dem Kühlkreislauf des Kraftfahrzeugmotors. Die Bezugszeichen 24 und 44 beziehen sich auf Ableitungen für die genannte Flüssigkeit. Über die Zuführungen 22 und 42 gelangt die Flüssigkeit in eine Verteilungs- und/oder Sammeleinrichtung 27.

Von der Verteilungs- und/oder Sammeleinrichtung 27 aus wird die Flüssigkeit auf eine Vielzahl von Flachrohren 29 verteilt.

Von hier ab fließt die Flüssigkeit, wie durch den Pfeil P1 dargestellt, in der Figur nach rechts, das heißt auf die Durchflusseinrichtung 49 zu. Innerhalb der Durchflusseinrichtung 29 dreht die Flüssigkeit ihre Flussrichtung um 180° und fließt zurück in die Sammel- und Verteilungseinrichtung 25 und dort über die Ableitung 24 aus der Heizeinrichtung ab. Anstelle zweier getrennter Verteilungs- und/oder Sammeleinrichtungen 25 und 27 könnte auch eine Verteilungs- und/oder Sammeleinrichtung vorgesehen sein, welche dann jedoch durch eine entlang Richtung b verlaufende Trenneinrichtung in zwei Teilräume unterteilt sein müsste.

In ähnlicher Weise stellt sich der Flüssigkeitsverlauf durch die Durchflusseinrichtungen 49 dar. Über die Zuführung 42 gelangt die Flüssigkeit in die Sammel- und/oder Verteilungseinrichtung 45 und von dort in die Durchflusseinrichtungen 49. Wie durch die Pfeile angezeigt, verläuft die Flüssigkeit auch dort zunächst in der Figur nach links, das heißt auf die Durchflusseinrichtung 29 zu.

Die Flüssigkeit wird auch hier in der Durchflusseinrichtung 49 in seiner Strömungsrichtung um 180° gedreht, gelangt schließlich in die (nicht gezeigten) Sammel- und Verteilungseinrichtung 47 und von dort über die Ableitung 44 aus der Vorrichtung.

Die Trennwände 23 und 43 verhindern, dass sich die Flüssigkeit entlang der gesamten Richtung b der Heizeinrichtung ausbreiten kann. Der Bereich 5b der Vorrichtung weist daher eine separate Zuführung 61 und eine (nicht gezeigte) Ableitung für das flüssige Medium auf. Durch die Trennwand 23 wird jedoch, wie unten noch ge, auer erläutert wird, nur die Verteilungs- und/oder Sammeleinrichtung 27, nicht jedoch die Sammel- und/oder Verteilungseinrichtung 25 in zwei Teilbereiche unterteilt.

Über die Zuführung 61 wird das Kältemittel in die Verteilungs- und/oder Sammeleinrichtung 27 geleitet, das heißt den Bereich des Sammel- und Verteilungsraums, der zu dem Bereich 5b gehört. Von dort gelangt es über die Durchflusseinrichtungen 63 in Richtung der Sammel- und/oder Verteilungseinrichtung 45 wiederum im Bereich 5b der Heizeinrichtung. Von dort gelangt das Kältemittel in die (nicht gezeigte) Verteilungs- und/oder Sammeleinrichtung 47, die parallel hinter der Sammel- und/oder Verteilungseinrichtung 45 angeordnet ist, und von dort über die Durchflusseinrichtungen 63 in den Verteilungs- und/oder Sammel- und/oder Verteilungseinrichtung 25. Die Trenneinrichtung 23 trennt zwar, wie gesagt, die Verteilungs- und/oder Sammeleinrichtung 27 in zwei Teilräume, nicht aber die Sammel- und/oder Verteilungseinrichtung 25. Aus diesem Grunde kann die Flüssigkeit ebenfalls in die Ableitung 24 gelangen und von dieser aus der Heizeinrichtung abgeführt werden. Daher dient die Ableitung 24 zum Abführen der Flüssigkeiten sowohl aus dem Bereich 5b als auch aus dem in der Figur linksseitigen Teil des Bereichs 5a. Die Heizeinrichtung weist damit drei unterschiedliche Strömungsbereiche für die Flüssigkeit auf.

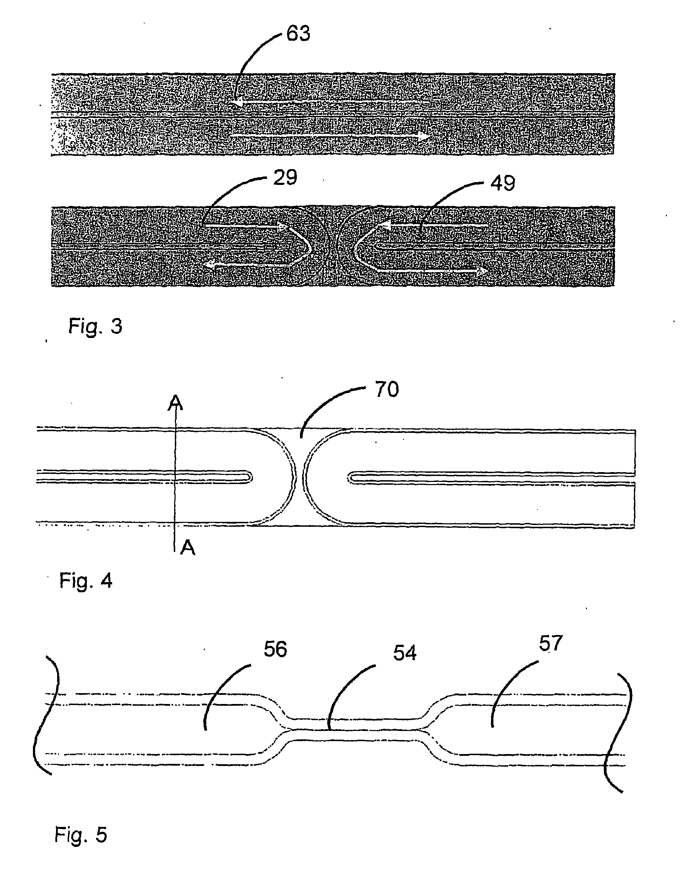

In Fig. 3 sind Ausschnitte aus den Durchflusseinrichtungen 29, 49 und 63 gezeigt. Die Pfeile veranschaulichen jeweils die Flussrichtung der Flüssigkeit innerhalb der Durchflusseinrichtungen. Die Durchflusseinrichtungen können einen oder mehrere Kanäle für die Flüssigkeit aufweisen.

Fig. 4 zeigt die Durchflusseinrichtungen 29 und 49 in einer weiteren Darstellung. Die beiden Durchflusseinrichtungen werden insgesamt bevorzugt einteilig hergestellt.

Fig. 5 zeigt eine Draufsicht auf die beiden Durchflusseinrichtungen 29 und 49 entlang Line A-A aus Fig. 4. Dabei wurden die jeweiligen Randbereiche links und rechts weggelassen. Um zu bewirken, dass innerhalb der Durchflusseinrichtung die Flüssigkeit in zwei Richtungen fließen kann wird der mittlere Abschnitt 54 der Durchasseinrichtung zusammengepresst so dass zwei Stränge 56 und 57 entstehen, in welchen die Flüssigkeit in jeweils unterschiedliche Richtung fließt, hier also in einem Fall in die Blattebene hinein und im anderen Fall aus der Blattebene heraus.

In dem Bereich 70 zwischen der Durchflusseinrichtung 29 und der Durchflusseinrichtung 49 kann durch geeignete Materialbearbeitung erreicht werden, dass sich die Strömungsrichtung der in der Durchflusseinrichtung 29 und 49 fließenden Flüssigkeit umkehrt. Dies kann zum Beispiel dadurch erreicht werden, dass die Durchflusseinrichtung in dem in Fig. 4 gezeigten Bereich 70 zusammengepresst wird und auf diese Weise zwei bogenförmige Umkehrbereiche entstehen. Es ist jedoch auch möglich, die Durchflusseinrichtung etwa in deren Mitte um 180° zu biegen, um so eine Umkehrung des Strömungsrichtung in diesem Bereich zu erreichen.

## Patentansprüche

1. Vorrichtung zum Austauschen und Zuführen von Wärme (1), insbesondere für ein Kraftfahrzeug mit:
- einer Zuführungeinrichtung zum Zuführen eines insbesondere gasförmigen Mediums;
- einer Heizeinrichtung (5) zum Erwärmen wenigstens eines Teil des gasförmigen Mediums;
- wenigstens einem in Strömungsrichtung des gasförmigen Mediums nach der Heizeinrichtung angeordneten Raum (7,9);
- wenigstens zwei von dem Raum (7,9) ausgehenden Kanälen für das gasförmige Medium, welche in wenigstens zwei Klimatisierungszonen des Innenraums des Kraftfahrzeugs führen:
- in wenigstens einem der Kanäle eine Regeleinrichtung (14) vorgesehen ist, welche die Menge des durch den Kanal strömenden Mediums regelt;
- die Heizeinrichtung (5) wenigstens zwei, bevorzugt eine Vielzahl von Durchflusseinrichtungen (29,49) für ein zweites Medium aufweist, wobei wenigstens zwei dieser Durchflusseinrichtungen unterschiedlich gestaltet sind, **dadurch gekennzeichnet, dass**
- innerhalb der Heizeinrichtung drei Flüssigkeitsströme im wesentlichen getrennt voneinander verlaufen und
- zwei der drei Flüssigkeitsströme in Durchflusseinrichtungen strömt, die wenigstens einen um 180° gekrümmten Abschnitt aufweisen und
- einer der drei Flüssigkeitsströme in Durchflusseinrichtungen strömt, die keinen In Längsrichtung gekrümmten Abschnitt aufweisen und
- die Durchflusseinrichtungen (29,49) flachrohrartigen Querschnitt aufweisen.

2. Vorrichtung nach Anspruch 1,
**dadurch gekennzeichnet, dass**
die Zuführungseinrichtung (2) für das insbesondere gasförmige Medium ein in Strömungsrichtung des gasförmigen Mediums vor der Heizeinrichtung angeordneter Raum ist.

3. Vorrichtung nach wenigstens einem der vorangegangenen Ansprüche,
**dadurch gekennzeichnet, dass**
in der Zuführungseinrichtung (2) eine weitere Vorrichtung zum Austauschen von Wärme, insbesondere ein Verdampfer angeordnet ist.

4. Vorrichtung nach wenigstens einem der vorangegangenen Ansprüche,
**dadurch gekennzeichnet, dass**
ein Lüfter vorgesehen ist, welche die Bewegung des gasförmigen Mediums in Strömungsrichtung wenigstens teilweise beschleunigt.

5. Vorrichtung nach wenigstens einem der vorangegangenen Ansprüche,
**dadurch gekennzeichnet, dass**
die Heizeinrichtung (5) von wenigstens einem zweiten Medium durchströmt wird und mehrere Zuleitungen und/oder Ableitungen für das zweite Medium aufweist.

6. Vorrichtung nach wenigstens einem der vorangegangenen Ansprüche,
**dadurch gekennzeichnet, dass**
die Heizeinrichtung (5) drei Zuführungen und zwei Ableitungen für das zweite Medium aufweist.

7. Vorrichtung nach wenigstens einem der vorangegangenen Ansprüche,
**dadurch gekennzeichnet, dass**
wenigstens eine Zuführung und/oder Ableitung der Heizeinrichtung (5) für das zweite Medium eine Regel- und/oder Steuereinrichtung aufweist, welche die Menge des durch diese Zuführung und/oder Ableitung fließenden Mediums regelt und/oder steuert.

8. Vorrichtung nach wenigstens einem der vorangegangenen Ansprüche,
**dadurch gekennzeichnet, dass**
die Heizeinrichtung (5) wenigstens eine Sammel- und/oder Verteilungseinrichtung aufweist, an welcher wenigstens eine Zuleitung und/oder wenigstens eine Ableitung vorgesehen ist.

9. Vorrichtung nach wenigstens einem der vorangegangenen Ansprüche,
**dadurch gekennzeichnet, dass**
die Vorrichtung zwei oder mehrere Sammel- und/oder Verteilungseinrichtungen (25,45) aufweist, an welchen sämtliche Zu- und/oder Ableitungen vorgesehen sind.

10. Vorrichtung nach wenigstens einem der vorangegangenen Ansprüche,
**dadurch gekennzeichnet, dass**
in wenigstens einer der Sammel- und/oder Verteilungseinrichtungen (25,45) erste Trenneinrichtungen (23,43) vorgesehen sind, welche die Sammel- und/oder Verteilungsräume (25,45) in wenigstens zwei Teilräume flüssigkeitsdicht unterteilen.

11. Vorrichtung nach wenigstens einem der vorangegangenen Ansprüche,
**dadurch gekennzeichnet, dass**
wenigstens eine Sammel- und/oder Verteilungseinrichtung (25,45) wenigstens eine zweite Trenneinrichtung (23,43) aufweist, wobei die Flächennormale dieser zweiten Trenneinrichtung im wesentlichen senkrecht auf den Flächennormalen der ersten Trenneinrichtungen steht.

12. Vorrichtung nach wenigstens einem der vorangegangenen Ansprüche,
**dadurch gekennzeichnet, dass**
wenigstens eine der Sammel- und/oder Verteilungseinrichtungen (25,45) keine Trenneinrichtungen aufweist.

13. Vorrichtung nach wenigstens einem der vorangegangenen Ansprüche,
**dadurch gekennzeichnet, dass**
wenigstens eine der Durchflußeinrichtungen (29,49) einen Bereich geringerer Dicke aufweist, wobei insbesondere durch diesen Bereich geringerer Dicke im wesentlichen kein Fluidstrom stattfindet.

14. Vorrichtung nach wenigstens einem der vorangegangenen Ansprüche,
**dadurch gekennzeichnet, dass**
wenigstens zwei der gekrümmten Durchflusseinrichtungen (29,49) einteilig miteinander verbunden sind.

15. Vorrichtung nach wenigstens einem der vorangegangenen Ansprüche,
**dadurch gekennzeichnet, dass**
von dem wenigstens einen nach der Heizeinrichtung angeordneten Raum mehrere Kanäle für das gasförmige Medium ausgehen, welche in mehrere Klimatisierungszonen des Innenraums des Kraftfahrzeugs führen.

16. Vorrichtung nach wenigstens einem der vorangegangenen Ansprüche,
**dadurch gekennzeichnet, dass**
in wenigstens einem, bevorzugt in jedem der Kanäle eine Regeleinrichtung vorgesehen ist, welche die Menge des durch den Kanal strömenden Mediums regelt.

17. Vorrichtung nach wenigstens einem der vorangegangenen Ansprüche,
**dadurch gekennzeichnet, dass**
wenigstens eine Regeleinrichtung vorgesehen ist, welche nicht in einem der Kanäle für das gasförmige Medium angeordnet ist.

18. Vorrichtung nach wenigstens einem der vorangegangenen Ansprüche,
**dadurch gekennzeichnet, dass**
in der Zuführung wenigstens eine Regeleinrichtung vorgesehen ist, welche die Menge des wenigstens durch einen Teilbereich der Zuführeinrichtung strömenden Mediums regelt.

19. Vorrichtung nach wenigstens einem der vorangegangenen Ansprüche,
**dadurch gekennzeichnet, dass**
wenigstens eine Regeleinrichtung in Strömungsrichtung des gasförmigen Mediums vor einem vorbestimmten Bereich der Heizeinrichtung eingerichtet ist.

20. Vorrichtung nach wenigstens einem der vorangegangenen Ansprüche,
**dadurch gekennzeichnet, dass**
in Strömungsrichtung des gasförmigen Mediums nach der Heizeinrichtung wenigstens zwei voneinander getrennte Räume vorgesehen sind.

21. Vorrichtung nach wenigstens einem der vorangegangenen Ansprüche,
**dadurch gekennzeichnet, dass**
von jedem der In Strömungsrichtung des gasförmigen Mediums nach der Heizeinrichtung angeordneten Räume mehrere Kanäle ausgehen, welche in mehrere Klimatisierungszonen um Inneren des Kraftfahrzeuges führen.

## Claims

1. Device for exchanging and supplying heat (1), in particular for a motor vehicle, comprising:
- a supply means for supplying an in particular gaseous medium;
- a heating means (5) for heating at least part of the gaseous medium;
- at least one chamber (7, 9) disposed downstream of the heating means in the flow direction of the gaseous medium;
- at least two ducts for the gaseous medium which emanate from the chamber (7, 9) and which lead into at least two air conditioning zones of the interior of the motor vehicle;
- a control means (14) provided in at least one of the ducts for the control of the volume of the medium flowing through the duct;
- the heating means (5) having at least two, preferably a plurality of, flow-through means (29, 49) for a second medium, at least two of these flow-through means being configured differently,
**characterised in that**
- three fluid flows run substantially separately from one another within the heating means and
- two of the three fluid flows flow in flow-through means having at least one section with an 180 degree curvature and
- one of the three fluid flows flows in flow-through means without any curvature in the longitudinal direction and
- the flow-through means (29, 49) have a flat tube-type cross-section.

2. Device according to claim 1,
**characterised in that**
the supply means (2) for the in particular gaseous medium is a chamber disposed upstream of the heating means in the flow direction of the gaseous medium.

3. Device according to one or more of the preceding claims,
**characterised in that**
a further means for exchanging heat, in particular an evaporator, is provided in the supply means (2).

4. Device according to one or more of the preceding claims,
**characterised in that**
a fan is provided which at least partially accelerates the movement of the gaseous medium in the flow direction.

5. Device according to one or more of the preceding claims,
**characterised in that**
at least one second medium flows through the heating means (5), which has a plurality of supply and/or discharge lines for the second medium.

6. Device according to one or more of the preceding claims,
**characterised in that**
the heating means (5) has three supplies and two discharges for the second medium.

7. Device according to one or more of the preceding claims,
**characterised in that**
at least one supply and/or discharge of the heating means (5) is provided with a regulating and/or control means for regulating and/or controlling the volume of the medium flowing through this supply and/or discharge.

8. Device according to one or more of the preceding claims,
**characterised in that**
the heating means (5) comprises at least one collecting and/or distributing means provided with at least one supply line and/or with at least one discharge line.

9. Device according to one or more of the preceding claims,
**characterised in that**
the device comprises two or more collecting and/or distributing means (25, 45) on which all of the supply and/or discharge lines are provided.

10. Device according to one or more of the preceding claims,
**characterised in that**
in at least one of the collecting/and or distributing means (25, 45) there are provided first separating means (23, 43) which subdivide the collecting and/or distributing chambers (25, 45) into at least tow sub-chambers in a fluid-tight manner.

11. Device according to one or more of the preceding claims,
**characterised in that**
at least one collecting and/or distributing means (25, 45) comprises second separating means (23, 43), the surface normal of these second separating means being substantially perpendicular to the surface normal of the first separating means.

12. Device according to one or more of the preceding claims,
**characterised in that**
at least one of the collecting and/or distributing means (25, 45) has no separating means.

13. Device according to one or more of the preceding claims,
**characterised in that**
at least one of the flow-through means (29, 49) has a region of reduced thickness, there being substantially no fluid flow through this region of reduced thickness.

14. Device according to one or more of the preceding claims,
**characterised in that**
at least two of the curved flow-through means (29, 49) are integrally connected to one another.

15. Device according to one or more of the preceding claims,
**characterised in that**
a plurality of ducts for the gaseous medium emanates from the at least one chamber downstream of the heating means and leads into a plurality of air conditioning zones of the interior of the motor vehicle.

16. Device according to one or more of the preceding claims,
**characterised in that**
a regulating means which regulates the volume of the medium flowing through the duct is provided in at least one, preferably in all, of the ducts.

17. Device according to one or more of the preceding claims,
**characterised in that**
at least one regulating means which is not disposed in one of the ducts for the gaseous medium is provided.

18. Device according to one or more of the preceding claims,
**characterised in that**
at least one regulating means which regulates the volume of the medium flowing through at least a sub-region of the supply means is provided in the supply.

19. Device according to one or more of the preceding claims,
**characterised in that**
at least one regulating means is set up upstream of a predetermined region of the heating means in the flow direction of the gaseous medium.

20. Device according to one or more of the preceding claims,
**characterised in that**
at least two chambers separated from one another are provided downstream of the heating means in the flow direction of the gaseous medium.

21. Device according to one or more of the preceding claims,
**characterised in that**
a plurality of ducts emanates from each of the chambers arranged downstream of the heating means in the flow direction of the gaseous medium and leads into a plurality of air conditioning zones in the interior of the motor vehicle.

## Revendications

1. Dispositif d'échange et d'alimentation de chaleur (1), en particulier pour un véhicule automobile, comprenant :
- un dispositif d'alimentation servant à fournir un milieu, en particulier gazeux ;
- un dispositif de chauffage (5) servant à chauffer au moins une partie du milieu gazeux ;
- au moins un espace (7, 9) disposé, dans la direction d'écoulement du milieu gazeux, en aval du dispositif de chauffage ;
- au moins deux conduits partant de l'espace (7, 9) et prévus pour le milieu gazeux, conduits qui débouchent dans au moins deux zones de climatisation de l'habitacle du véhicule automobile ;
- dans au moins l'un des conduits, il est prévu un dispositif de régulation (14) qui régule la quantité du milieu s'écoulant à travers le conduit ;
- le dispositif de chauffage (5) présente au moins deux, de préférence une multiplicité de dispositifs de circulation (29, 49) pour un deuxième milieu, où au moins deux de ces dispositifs de circulation sont configurés de façon différente,
**caractérisé en ce que**
- trois flux de liquide pratiquement séparés les uns des autres s'écoulent à l'intérieur du dispositif de chauffage, et
- deux des trois flux de liquide, qui s'écoulent dans des dispositifs de circulation, présentent au moins une partie coudée à 180°, et
- l'un des trois flux de liquide, qui s'écoule dans des dispositifs de circulation, ne présente aucune partie coudée dans le sens longitudinal, et
- les dispositifs de circulation (29, 49) présentent une section en forme de tube plat.

2. Dispositif selon la revendication 1, **caractérisé en ce que** le dispositif d'alimentation (2) prévu pour le milieu, en particulier gazeux, est un espace disposé en amont du dispositif de chauffage, dans la direction d'écoulement du milieu gazeux.

3. Dispositif selon au moins l'une ou l'autre des revendications précédentes, **caractérisé en ce qu'**un autre dispositif servant à l'échange de chaleur, en particulier un évaporateur, est disposé dans le dispositif d'alimentation (2).

4. Dispositif selon au moins l'une quelconque des revendications précédentes, **caractérisé en ce qu'**il est prévu un ventilateur qui accélère au moins partiellement le mouvement du milieu gazeux, dans la direction d'écoulement.

5. Dispositif selon au moins l'une quelconque des revendications précédentes, **caractérisé en ce que** le dispositif de chauffage (5) est traversé par au moins un deuxième milieu et présente plusieurs conduites d'alimentation et / ou conduites d'évacuation pour le deuxième milieu.

6. Dispositif selon au moins l'une quelconque des revendications précédentes, **caractérisé en ce que** le dispositif de chauffage (5) présente trois conduites d'alimentation et deux conduites d'évacuation pour le deuxième milieu.

7. Dispositif selon au moins l'une quelconque des revendications précédentes, **caractérisé en ce qu'**au moins une conduite d'alimentation et / ou conduite d'évacuation du dispositif de chauffage (5) présente, pour le deuxième milieu, un dispositif de régulation et / ou de commande qui régule et / ou commande la quantité du milieu s'écoulant à travers cette conduite d'alimentation et / ou conduite d'évacuation.

8. Dispositif selon au moins l'une quelconque des revendications précédentes, **caractérisé en ce que** le dispositif de chauffage (5) présente au moins un dispositif collecteur et / ou répartiteur sur lequel il est prévu au moins une conduite d'alimentation et / ou au moins une conduite d'évacuation.

9. Dispositif selon au moins l'une quelconque des revendications précédentes, **caractérisé en ce que** le dispositif présente deux ou plusieurs dispositifs collecteurs et / ou répartiteurs (25, 45) sur lesquels il est prévu la totalité des conduites d'alimentation et / ou d'évacuation.

10. Dispositif selon au moins l'une quelconque des revendications précédentes, **caractérisé en ce qu'**il est prévu, dans au moins l'un des dispositifs collecteurs et / ou répartiteurs (25, 45), des premiers dispositifs séparateurs (23, 43) qui divisent en au moins deux espaces partiels, de façon étanche au fluide, les espaces collecteurs et / ou répartiteurs (25, 45).

11. Dispositif selon au moins l'une quelconque des revendications précédentes, **caractérisé en ce qu'**au moins un dispositif collecteur et / ou répartiteur (25, 45) présente au moins un deuxième dispositif séparateur (23, 43), où la normale à la surface de ce deuxième dispositif séparateur est pratiquement perpendiculaire par rapport aux normales aux surfaces des premiers dispositifs séparateurs.

12. Dispositif selon au moins l'une quelconque des revendications précédentes, **caractérisé en ce qu'**au moins l'un des dispositifs collecteurs et / ou répartiteurs (25, 45) ne présente aucun dispositif séparateur.

13. Dispositif selon au moins l'une quelconque des revendications précédentes, **caractérisé en ce qu'**au moins l'un des dispositifs de circulation (29, 49) présente une zone de plus faible épaisseur, où il n'y a pratiquement aucun flux de fluide, en particulier à travers cette zone de plus faible épaisseur.

14. Dispositif selon au moins l'une quelconque des revendications précédentes, **caractérisé en ce qu'**au moins deux des dispositifs de circulation coudés (29, 49) sont assemblés en formant un ensemble d'un seul et même tenant.

15. Dispositif selon au moins l'une quelconque des revendications précédentes, **caractérisé en ce que** plusieurs conduits prévus pour le milieu gazeux partent de l'espace, au moins au nombre de un disposé en aval du dispositif de chauffage, conduits qui débouchent dans plusieurs zones de climatisation de l'habitacle du véhicule automobile.

16. Dispositif selon au moins l'une quelconque des revendications précédentes, **caractérisé en ce qu'**il est prévu, dans au moins un, de préférence dans chacun des conduits, un dispositif de régulation qui régule la quantité du milieu s'écoulant à travers le conduit.

17. Dispositif selon au moins l'une quelconque des revendications précédentes, **caractérisé en ce qu'**il est prévu au moins un dispositif de régulation qui n'est pas disposé dans l'un des conduits prévus pour le milieu gazeux.

18. Dispositif selon au moins l'une quelconque des revendications précédentes, **caractérisé en ce qu'**il est prévu, dans la conduite d'alimentation, au moins un dispositif de régulation qui régule la quantité du milieu s'écoulant au moins à travers une zone partielle du dispositif d'alimentation.

19. Dispositif selon au moins l'une quelconque des revendications précédentes, **caractérisé en ce qu'**au moins un dispositif de régulation est monté en amont d'une zone prédéterminée du dispositif de chauffage, dans la direction d'écoulement du milieu gazeux.

20. Dispositif selon au moins l'une quelconque des revendications précédentes, **caractérisé en ce qu'**il est prévu au moins deux espaces séparés l'un de l'autre, en aval du dispositif de chauffage, dans la direction d'écoulement du milieu gazeux.

21. Dispositif selon au moins l'une quelconque des revendications précédentes, **caractérisé en ce que** plusieurs conduits partent de chacun des espaces disposés en aval du dispositif de chauffage, dans la direction d'écoulement du milieu gazeux, conduits qui débouchent dans plusieurs zones de climatisation de l'habitacle du véhicule automobile.
